# EUROPEAN PATENT SPECIFICATION

(11) **EP 4 374 096 B1**
(45) Date of publication and mention of the grant of the patent: **22.01.2025**
(21) Application number: 22758312.7
(22) Date of filing: 22.07.2022
(51) Int. Cl.: F16K 15/02

(54) **FLOW CONTROL DEVICE WITH EXTENDED SHUTTLE TO ENHANCE FUNCTION OF DRAIN CHECK VALVE**
DURCHFLUSSREGELVORRICHTUNG MIT ERWEITERTEM SHUTTLE ZUR VERBESSERUNG DER FUNKTION EINES ABFLUSSRÜCKSCHLAGVENTILS
DISPOSITIF DE RÉGULATION DE DÉBIT À FURET ÉTENDU POUR AMÉLIORER LA FONCTION DE CLAPET ANTIRETOUR DE VIDANGE

(30) Priority: 22.07.2021 US 202163224507 P
(43) Date of publication of application: 29.05.2024
(73) Proprietor: Nelson Irrigation Corporation, Walla Walla, WA 99362 (US)
(72) Inventor: GREENWOOD, Riley D., Walla Walla, WA 99362-2271 (US)
(74) Representative: Ribeiro, James Michael
(86) International application number: PCT/US2022/037968
(87) International publication number: WO 2023/004094

(56) References cited:
- US-A1- 2019 351 435

## Description

### RELATED APPLICATION

This application claims priority to U.S. Provisional Patent Application 63/224,507, filed July 22, 2021.

### TECHNICAL FIELD

The invention relates to drain check valves and pressure regulators for supplying water to irrigation sprinklers and nozzles.

### BACKGROUND

Irrigation systems often have many sprinklers and nozzles arranged along an extended water supply pipe. A water supply pipe in a center pivot irrigation system may extend a quarter to half a mile (400 to 800 meters). The water supply pipe may have a diameter of six to ten inches (152 to 254 millimeters) and provide water for over a hundred sprinklers or nozzles arranged along the pipe. Similarly, solid set irrigation systems may include long rows of water supply pipes placed on the ground between rows of crops with sprinklers on posts at regular locations along the supply pipes. Each sprinkler or nozzle is typically connected to the water supply pipe by a smaller water pipe that extends substantially vertically, i.e., within 10-20 degrees of vertical. A drain check valve and/or a pressure regulator may be connected to the smaller water pipe upstream of the sprinkler or nozzle.

As a water supply pipe extends hundreds of meters, the pipe may rise over hills and drop into low points of an agricultural field. When water flow to a water supply pipe is turned off, water collects at low points in the pipe and drains out through sprinklers or nozzles at the low points. Water draining from sprinklers and nozzles after shutting off the water supply is not desired in certain irrigation applications, such as for crops that do not tolerate temporary flooding. The concern of excessive water on crops as water drains through sprinklers becomes greater for irrigation schedules that apply periodic bursts of water to the crops with water turned off between bursts.

To address concerns of water draining through sprinklers and nozzles, each sprinkler or nozzle may be connected to a drain check valve configured to turn on or off the flow of water to the sprinkler or nozzle. The drain check valve may automatically close in response to water pressure dropping below a threshold level and automatically open in response to the pressure increasing above the threshold.

Drain check valves may be integrated with pressure regulators. Pressure regulators provide water at a uniform pressure to sprinklers and nozzles. Pressure regulators compensate for pressure variations in the water flowing through a water supply pipe towards the sprinklers and nozzles. The pressure variations may be caused by height variations in the water supply pipe and frictional losses along the long lengths of the pipes.

Sprinklers and nozzles are typically designed to receive water under a relatively low pressure and within a narrow pressure range. Pressure regulators are often connected immediately upstream of a sprinkler or nozzle to ensure that the water pressure at the inlet to the sprinkler or nozzle is within a design pressure range for the sprinkler or nozzle.

US 2019/0351435 A1 discloses a known pressure regulator comprising the features of a flow control device according to the preamble of claims 1 and 13.

### BRIEF SUMMARY

The inventors conceived and disclosed herein a drain check valve that may be integrated with a pressure regulator. The drain check valve includes an elongated drain check shuttle assembly within a housing. The drain check shuttle assembly moves axially within the housing between a forward, upstream position at which the assembly shuts off water flow through the drain check valve and a rear, downstream position which opens water flow through the drain check valve.

The drain check shuttle assembly includes annular seals, such as O-rings, that prevent water leakage past the assembly into an internal chamber of the housing while the assembly is both in the forward and rear positions, and while the assembly moves between these positions. While the drain check shuttle assembly is in the forward position, another seal engages a strut of a valve seat to prevent leakage through a water flow passage in the drain check valve. This seal disengages the strut as the drain check shuttle assembly moves towards the rear position. The drain check shuttle assembly is elongated to enhance its ability to move between the forward and rear positions while maintaining watertight seals and aligning with the strut and valve seat as the assembly moves to the forward position.

The invention may be embodied as a flow control device comprising: a housing having a flow passage including an inlet flow passage and an outlet flow passage; a hollow tube in the housing and defining a tube passage included in the flow passage, a valve seat in the flow passage and facing an inlet to the hollow tube; a cylindrical liner fixed to the housing, separated from the flow passage; and including at least one slot; and a drain check shuttle assembly in the housing and configured to move relative to the housing and the hollow tube, wherein the drain check shuttle assembly includes: a first position at which the drain check shuttle assembly closes a gap between the valve seat and the inlet to the hollow tube; and a second position in which the drain check shuttle assembly is displaced from the valve seat to open the gap, and the drain check shuttle assembly includes a cylindrical carrier extending into the cylindrical liner and in sliding contact with the cylindrical liner, wherein the cylindrical liner includes an opening through which extends the hollow tube.

The cylindrical liner may include at least one slot and the cylindrical carrier may include at least one catch protruding into the at least one slot of the cylindrical liner, wherein axial and rotational movement of the drain check shuttle assembly is restricted by the at least one catch engaging the at least one slot. The at least one slot may be oriented parallel to a longitudinal axis of the hollow tube. The at least one slot may be in a rear region of the cylindrical carrier. The at least one slot is at least three slots arranged symmetrically around the cylindrical liner.

The flow control device may include a helical spring having a spring end seated against an internal annular surface of the cylindrical carrier to bias the drain check shuttle assembly towards the first position.

The hollow tube may be a plunger configured to move axially with respect to the housing, and the flow control device further comprises an annular diaphragm forming a deformable seal between a liquid-filled chamber receiving liquid flowing through the outlet flow passage and an internal chamber within the housing.

The drain check shuttle assembly may include: an outer annular seal mounted to an outer surface of the cylindrical carrier and configured to form a seal between the drain check shuttle assembly and the housing, a first inner annular seal mounted to the cylindrical carrier and extending around an opening in the cylindrical carrier, wherein the first inner annular seal is configured to form a seal between the drain check shuttle assembly and a strut supporting the valve seat and attached to the housing, and a second inner annular seal mounted to the cylindrical carrier and extending around the opening, wherein the second inner annular seal is configured to form a seal between the drain check shuttle assembly and the hollow tube.

The first annular seal support may be mounted to a front end of the carrier, wherein the first annular seal support includes an outer lip abutting the outer annular seal and an inner lip abutting the first inner annular seal. The second annular seal support may be seated on an inside surface of the carrier and extending around the opening, wherein the second annular seal support includes a forwardly angled lip gripping the first inner annular seal and the first annular seal support includes a rearwardly angled lip gripping the first inner annular seal.

The invention may be embodied as a flow control device comprising: a housing including an inlet flow passage and an outlet flow passage; a hollow tube within the housing defining a tube passage wherein a flow passage through the housing includes the tube passage, the inlet flow passage and the outlet flow passage; a valve seat attached to the housing, extending into the inlet flow passage and facing an inlet to the hollow tube, and a drain check shuttle assembly within the housing and configured to move relative to the housing and the hollow tube, wherein the drain check shuttle assembly has: a forward position at which the drain check shuttle assembly closes a gap between the valve seat and the inlet to the hollow tube; and a rearward position at which the drain check shuttle assembly does not close the gap, and the drain check shuttle assembly comprises a carrier including a forward region and a rear region, wherein: the forward region of the drain check shuttle assembly includes an outer seal configured to seal the drain check shuttle assembly with respect to the housing, an opening to receive the hollow tube, a first inner seal configured to seal the drain check shuttle assembly with respect to the valve seat while the drain check shuttle assembly is in the forward position, and a second inner seal configured to seal the drain check shuttle assembly with respect to the hollow tube, and the rear region has an axial length of at least one half of the axial length of the drain check shuttle assembly, and the rear region extends rearward of the forward region and the opening.

The flow control device may include a liner in the housing and enclosing the rear region of the carrier, wherein an inner surface of the liner forms a bearing surface against which slides an outer surface of the rear region. The liner may include at least one slot, and the at least one slot receives at least one catch of the carrier, wherein the at least one slot engages the catch to limit axial and angular movement of the drain check shuttle assembly. The at least one slot may be in a rear region of the carrier and the at least one catch may be at a rear end of the rear region of the carrier. The at least one slot may be at least three slots arranged symmetrically around the carrier.

The hollow tube, the drain check shuttle assembly and the liner may be coaxial.

The flow control device may include a helical spring including a first end seated against an internal surface of the carrier.

In the flow control device, the hollow tube may be a plunger configured to move axially with respect to the housing, and the flow control device further comprises a diaphragm forming a deformable seal between a water chamber in fluid communication with a liquid flowing through an outlet to the housing and an internal chamber within the housing.

The flow control device may include a plunger support, wherein an inner annular rim of a diaphragm is clamped between the plunger support and a flange of the hollow tube, and the plunger support includes a frustoconical support receiving and supporting the hollow tube. The plunger support may include a forward-facing side comprising an annular channel receiving an end of the helical spring, and a rearward-facing side including an annular recess configured to receive the inner annular rim of the diaphragm.

The drain check shuttle assembly may include a first inner annular seal mounted to the forward region of the carrier and extending around the opening in the carrier, wherein the first inner annular seal is configured to form a seal between the drain check shuttle assembly and a strut of the valve seat, and a second inner annular seal mounted to the carrier and extending around the opening in the carrier, wherein the second inner annular seal is configured to form a seal between the drain check valve and an outer surface of the hollow tube.

Other aspects, features, and advantages of the disclosed and novel drain check valve for a pressure regulator are apparent from the following detailed description when taken in conjunction with the accompanying drawings, which are a part of this disclosure and which illustrate, by way of example, principles of this technology.

### SUMMARY OF THE DRAWINGS

FIG. 1 is a side view of a pressure regulator that includes a drain check shuttle assembly;
FIG. 2 is a cross-sectional view of the pressure regulator illustrated in FIG. 1 and shows the drain check shuttle assembly in a forward, closed position;
FIG. 3 is a cross-sectional view of the pressure regulator illustrated in FIG. 1 and shows the drain check shuttle assembly in a rearward, open position and a plunger spaced from the valve seat;
FIG. 4 is a cross-sectional view of the pressure regulator illustrated in FIG. 1 and shows the drain check shuttle assembly in the rearward, open position and the plunger seated on the valve seat;
FIG. 5 is a perspective view of the drain check shuttle assembly;
FIG. 6 is a side view of a cross section of the drain check shuttle assembly;
FIG. 7 is a side view of a cross section of the drain check shuttle assembly mounted in a liner;
FIG. 8 is an exploded view of cross sections of the carrier for the drain check shuttle assembly and the liner;
FIG. 9 is a perspective view of the liner;
FIG. 10 is a perspective view of a plunger support;
FIGS. 11 and 12 are perspective views of a drain check valve having a hollow tube fixed with respect to the housing, showing the drain check shuttle assembly in an open position in FIG. 11, and in a closed position in FIG. 12;
FIG. 13 is a perspective view of the hollow tube shown in FIGS. 11 and 12;
FIGS. 14 and 15 are perspective views of another drain check valve having an integral hollow tube and liner fixed with respect to the housing, showing the drain check shuttle assembly in an open position in FIG. 14, and in a closed position in FIG. 15;
FIG. 16 is a perspective view of the integral hollow tube and liner shown in FIGS. 14 and 15; and
FIG. 17 is a perspective view of the integral hollow tube and liner in combination with the drain check shuttle assembly, spring and cylindrical carrier.

### DETAILED DESCRIPTION

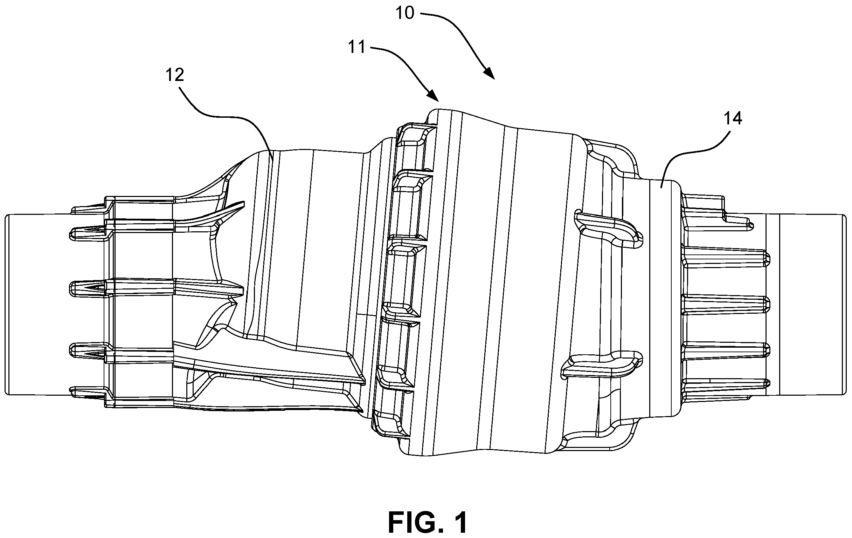

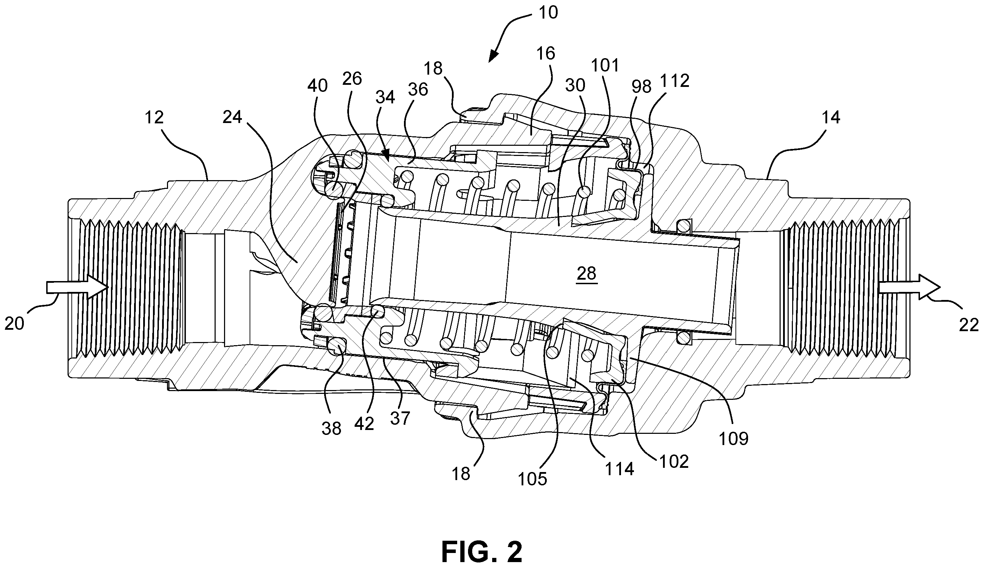

FIG. 1 shows a flow-through type pressure regulator 10 having a drain check valve. The pressure regulator 10 includes a housing 11 formed by an inlet cap 12 and an outlet cap 14. The inlet and outlet caps may be connected by a snap or screw connection, a threaded collar (not shown), by welding or other fastening means. The inlet cap 12 includes an annular ridge or teeth 16 (FIG. 2) extending radially outward at an end of the inlet cap. The outlet cap 14 includes an annular lip 18 (FIG. 2) extending radially inwardly and at an end of the outlet cap. The ridge or teeth 16 of the inlet cap engage the lip of the outlet cap 14 to lock the inlet and outlet caps together.

FIGS. 2 to 4 are cross-sectional views of the pressure regulator 10. The inlet cap 12 includes an inlet flow passage 20, and the outlet cap 14 includes an outlet flow passage 22. The inlet and outlet flow passages may have threaded surfaces to receive water pipes (not shown) connected to opposite ends of the pressure regulator. A vertical water pipe (not shown) connects to the inlet of the pressure regulator to the water supply pipe. The outlet flow passage 22 may be connected directly or via a pipe section to a sprinkler or nozzle (not shown) that hangs or is otherwise supported by the pressure regulator. The inlet and outlet flow passages 20, 22 may be coaxial as shown in FIGS. 2 to 4, or may have offsetting parallel axes. Alternatively, the axes of the inlet and outlet passages 20 and 22 may intersect to form an acute angle, such as an angle of less than 10-15 degrees.

The flow passage through the pressure regulator 10 extends through the inlet flow passage 20, over and around a strut 24 supporting a valve seat 26, through a plunger flow passage 28 of a plunger 30, and through the outlet flow passage 22. The strut 24 extends from an inner wall 37 of the inlet cap into the flow passage. The rear end of the strut forms a valve seat 26. The upstream surface(s) of the strut may be smooth and sloped in a downstream direction to reduce disruption of water flow through the inlet flow passage 20.

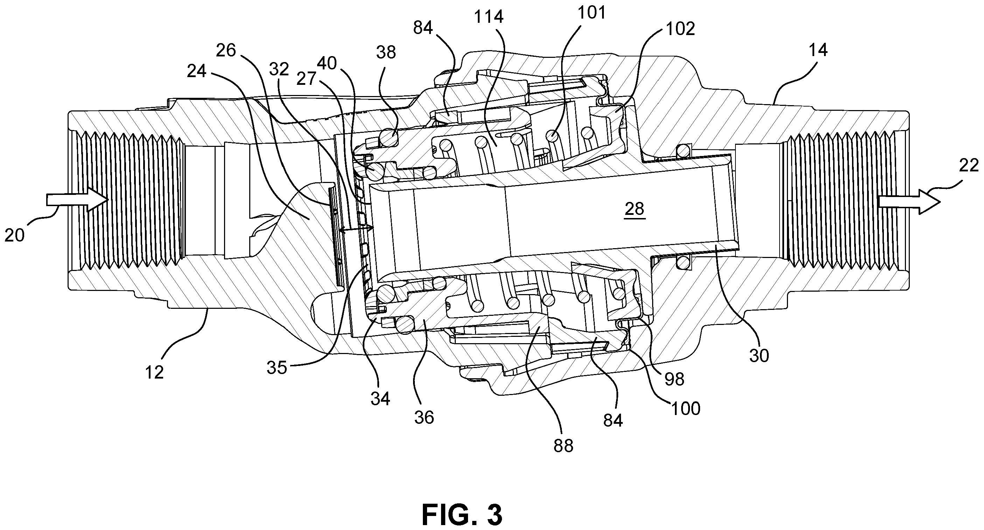

The flow passage includes a gap 32 (FIG. 3) between the valve seat 26 and the inlet 27 to the plunger. The plunger 30 may move axially in the housing 11 to regulate pressure in a manner described below. If the device 10 is not configured as a pressure regulator, the plunger 30 may be a hollow tube fixed to the outlet cap 14 such that the plunger does not move axially.

Water flows through the pressure regulator while the gap 32 is open, as is shown in FIG. 3. As shown in FIG. 2, water is prevented from flowing through the pressure regulator by a drain check shuttle assembly 34. The drain check shuttle assembly slides between a forward position as shown in FIG. 2, to close the gap and a rearward position as shown in FIG. 3 that opens the gap 32.

The drain check shuttle assembly 34 may act as an on-off valve that either entirely opens the gap 32 or entirely closes the gap. The drain check shuttle assembly 34 may have steady state positions only in its forward and rearward positions.

The gap 32 is the narrowest region of the flow passage through the pressure regulator. The gap restricts water flow through the drain check or pressure regulator. If the drain check does not include a pressure regulator, the gap may be constant.

If a pressure regulator is integrated with the drain check, the gap 32 varies to regulate water flow through the pressure regulator. The water pressure in the outlet flow passage 22 depends on the degree to which the gap restricts water flow. The wider the gap, the less the restriction and the lower the relative drop across the gap. The narrower the gap, the greater the restriction and the greater the reduction in water pressure across the gap.

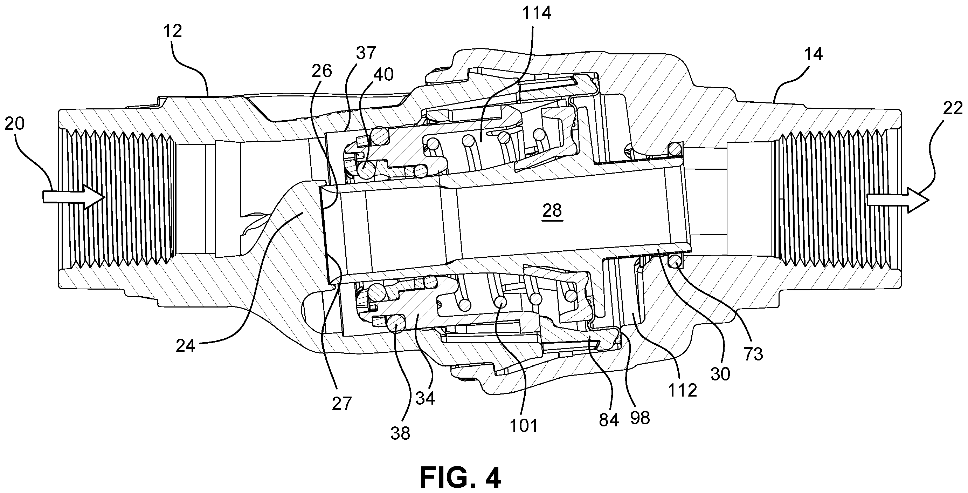

Pressure regulation is achieved by varying the width of the gap 32, while the drain check shuttle assembly is in the rearward position. The width of the gap is the distance from the valve seat 26 to the inlet 27 of the plunger. The plunger 30 moves axially to widen and narrow the gap, and thereby adjusts the water pressure in the outlet flow passage 22. FIG. 3 shows the inlet 27 of the plunger in a rearward position which opens the gap to a widest position. FIG. 4 shows the inlet 27 of the plunger in a forward position seated on the valve seat 26 which closes the gap. In FIGS. 3 and 4, the drain check shuttle assembly 34 is in the rearward position and thus does not close the gap 32.

The inlet 27 of the plunger is positioned between the rearward and forward positions to adjust the width of the gap 32 and thereby controls the pressure in the outlet flow passage 22. The plunger 30 may move automatically to achieve a uniform pressure at the outlet of the pressure regulator. The plunger 30 may move in response to changes in the water pressure in the outlet flow passage. The movement of the plunger to adjust the gap 32 suppresses these changes and achieves a generally uniform water pressure at the outlet flow passage 22.

As shown in FIGS. 2 to 6, the drain check shuttle assembly 34 includes an opening 35 in an upper region of the assembly. The plunger 30 extends through the opening 35. The plunger moves axially relative to the drain check shuttle assembly 34 and the outlet cap 14 as the plunger moves to regulate water pressure. Similarly, the drain check shuttle assembly 34 moves axially relative to the plunger and the housing as the assembly 34 moves between its forward and rearward positions.

The drain check shuttle assembly 34 includes an outer annular seal 38, such as an O-ring, that forms a watertight seal between the assembly 34 and an inner wall 37 of the housing 11 to prevent leakage of water into an internal chamber 114 within the drain check or pressure regulator. The drain check shuttle assembly 34 also forms a watertight seal, via a second inner annular seal 42, such as an O-ring, with the plunger 30 to prevent leakage of water into the chamber 114. These watertight annular seals 38, 42 are maintained while the drain check shuttle assembly moves between its forward and rearward positions, and while the plunger moves axially.

While in the forward position, the drain check shuttle assembly 34 forms a watertight seal, via a first inner annular seal 40, such as an O-ring, with the strut 24 to prevent water leakage through the gap 32. The watertight seal with the valve seat is released when the drain check shuttle assembly 34 moves to the rearward position. The seal between the drain check shuttle assembly and the strut is formed by the first inner annular seal 40 that is repeatedly formed and released as the drain check shuttle assembly moves to close and open water flow through the pressure regulator.

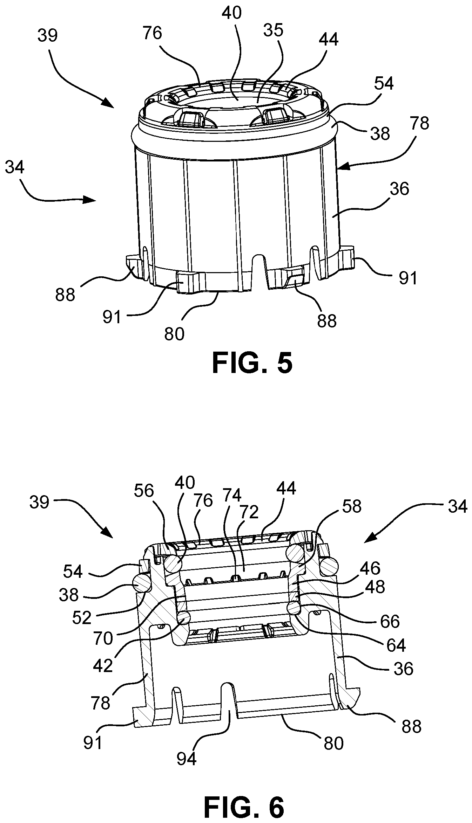

As shown in FIGS. 5 to 7, the drain check shuttle assembly 34 includes a cylindrical carrier 36 that supports the annular seals 38, 40, 42. These annular seals are mounted to a forward region 39 of the carrier 36. The annular seals 38 and 40 are held in place on the forward region by a first annular seal support 44, a second annular seal support 46. The second inner annular seal 42 is held in place between the second annular seal support 46 and a third annular seal support 48. The annular seals may be formed of elastic materials, such as rubber, plastics, polybutadiene, or polyurethane.

The outer annular seal 38 slides across the inner wall 37 of the inlet cap as the drain check shuttle assembly 34 moves between the forward and rearward positions. The outer annular seal 38 seats on an annular ledge 52 in an outer surface of the carrier 36. The outer annular seal 38 is sandwiched between the ledge 52 and an outer lip 54 of the first annular seal support 44. The outer annular seal 38 is held in place by the ledge 52, an annular wall of the carrier adjacent the ledge 52, the outer lip 54 of the first annular seal support 44 and the inner wall 37 of the housing.

The first inner annular seal 40 is held between an annular inner lip 56 on the first annular seal support 44, and an annular upper lip 58 of the second annular seal support 46. The inner lip 56 and the upper lip 58 both extend radially inward a distance greater than a radius of a cross section of the first inner annular seal 40 but less than the diameter of the first inner annular seal. The lips 56, 58 also extend towards each other, e.g., converge in a radially inward direction, to grasp the first inner annular seal 40. The first inner annular seal 40 is held secure by the lips 56, 58 and against a first inner cylindrical surface 62 of the carrier 36. The inner circumferential surface of the first inner annular seal 40 is unsupported by the valve seat or strut while the drain check shuttle assembly 34 is in the rearward position. While the inner circumferential surface of the first inner annular seal 40 is unsupported, the converging lips 56, 58 securely hold the first inner annular seal 40 within the drain check shuttle assembly. By securely holding the first inner annular seal 40, the converging lips 56, 58 ensure that the first inner annular seal 40 is not dislodged from the carrier as the first inner annular seal 40 moves in and out of contact with the valve seat.

The second inner annular seal 42 forms a seal between the drain check shuttle assembly 34 and an outer surface of the plunger 30. The second inner annular seal 42 remains in contact with the plunger 30 as the plunger and drain check shuttle assembly move relative to each other. The second inner annular seal 42 may have a circumference and cross-sectional area smaller than that of the first inner annular seal 40. The first inner annular seal 40 has a larger circumference because it fits around and seals with the valve seat and particularly around the end of the strut 24 which forms the valve seat. The second inner annular seal has a smaller circumference because it fits around and seals with the plunger which may have an outer diameter narrower than the diameter of the valve seat.

The second inner annular seal 42 is positioned in the drain check shuttle assembly such that the annular seal always remains in sliding contact with the plunger while the drain check shuttle assembly 34 moves relative to the plunger. The second inner annular seal 42 supports the plunger near the inlet 27 to the plunger while allowing the plunger to move axially with respect to the second inner annular seal 42. The support provided by the second inner annular seal assists in aligning the inlet 27 of the plunger with the valve seat 26. The second inner annular seal 42 also suppresses movement of the inlet end of the plunger in a radial direction with respect to the axis of the plunger.

To ensure that the second inner annular seal 42 is always in contact with the plunger, the axial distance between the first inner annular seal 40 and the second inner annular seal 42 should be substantially greater than the gap 32 between the valve seat and the inlet to the plunger, while the plunger is in the rearward position. The distance between the first and second inner annular seals may be in a range of 120- 175 percent of the gap 32 while the plunger is in the rearward position.

The axial distance between the first and second annular seals 40, 42, may be set by the axial lengths of the second annular seal support 46 and the third annular seal support 48. The second annular seal support 46 and third annular seal support 48 are mounted in the carrier 36 such that they are coaxial with the carrier and adjacent to each other in the carrier. The second annular seal support 46 and third annular seal support 48 may be combined into a single, one-piece component.

The second inner annular seal 42 is supported in the carrier 36 by being sandwiched between an inner annular ledge 64 of the carrier and the third annular seal support 48. The third annular seal support 48 is seated in the carrier 36 and has an outer surface adjacent a second inner cylindrical surface 66 on the carrier. The second inner cylindrical surface 66 has a smaller diameter than the first inner surface 62 of the carrier 36.

The inside cylindrical surface of the third annular seal support 48 and a first inside cylindrical surface 70 of the second annular seal support 46 may have the same diameter. These diameters are slightly greater, such as by 103-115 percent, than the inside diameter of the second inner annular seal 42, to avoid abutting the outer surface of the plunger. The second annular seal support 46 includes a second inside cylindrical surface 72 that has a larger diameter than the first inside cylindrical surface 70, such as in a range of 103-115 percent larger. The larger diameter of the second inside cylindrical surface 72 is to accommodate the larger inner diameter of the first inner annular seal 40. The larger diameter of the second inside cylindrical surface 72 avoids having the second annular seal support 46 abut the outer surface of the strut 24 while the drain check shuttle assembly is in a forward position. Triangular ribs 74 on the second annular seal support 46 may be arranged symmetrically around the second inside cylindrical surface 72 and adjacent the interface with the first inside cylindrical surface 70. The triangular ribs 74 serve as ramped stops for the valve seat and to prevent the valve seat from hitting the ledge between the first and second inside cylindrical surfaces 70, 72.

A rear O-ring 73 (FIG. 4) assists in dampening outlet pressure feedback from outlet flow passage 22 into the water chamber 112. The rear O-ring does not form a watertight seal with the plunger.

Water in the outlet flow passage 22 flows over the O-ring 73 and into a water chamber 112 (FIG. 4) in the outlet cap 14. The water chamber 112 is adjacent the diaphragm 98, as shown in FIG. 4. Also, the rear portion of the plunger may fit loosely in the outer flow passage 22 as the plunger and outer flow passage need not be coaxial, and the plunger moves reciprocally in the outlet cap 14 in a pressure regulator configuration.

The annular front surface 76 of the drain check shuttle assembly 34 faces the water flowing from the inlet flow passage 20 and into the inlet 27 of the plunger 30. The front surface 76 moves relative to the inlet 27 of the plunger due to the movements of the plunger and the drain check shuttle assembly. The front surface 76 is annular and may be curved in radial directions with respect to the axis of the plunger. The front surface 76 may have shallow grooves oriented radially. The curved surface and grooves direct water flowing over the front surface 76 towards the inlet to the plunger.

The front surface 76 is not always aligned with the inlet 27 of the plunger 30 due to the relative movements of the drain check shuttle assembly 34 and the plunger. The front surface is forward of the inlet to the plunger while the drain check shuttle assembly is in the forward position. The front surface is rearward of the inlet to the plunger while the drain check shuttle assembly is in the rearward position. The front surface 76 may be aligned with the inlet 27 to the plunger only while the plunger and the drain check shuttle assembly are in their rearward positions.

The carrier 36 includes a rear region 78 that may be an extended cylindrical section that extends from the annular ledge 52 of the carrier rearward to an annular end 80 of the carrier. The rear region 78 of the carrier that extends the drain check shuttle assembly 34 rearward to assist in keeping the opening 35 aligned with the strut 24 as the assembly moves forward towards the valve seat. The rear region 78 also aids in providing smooth sliding of the drain check shuttle assembly in the housing 11 and prevents the assembly from becoming stuck as it moves forward and rearward. The rear region 78 may be one-half to three-quarters or more of the entire axial length of the drain check shuttle assembly 34.

An outer surface of a forward portion of the rear region 78 is in sliding engagement with an inner wall 37 of the inlet cap 12. The sliding engagement between the outer surface of the rear region 7 8 and the inner wall 37 serves to keep the drain check shuttle assembly aligned with the valve seat as the drain check shuttle assembly slides between its forward and rearward positions and aids in preventing the assembly 34 from becoming angularly offset from the inner wall 37.

The rear end of the rear region 78 of the carrier extends into a cylindrical liner 84. The liner 84 is seated in the housing such that the liner does not move relative to the housing. The liner 84 has an inner cylindrical surface that receives and forms a bearing surface with respect to the outer surface of the rear region 78 of the carrier 36. The sliding engagement between the liner and the rear region 78 aids in keeping the drain check shuttle assembly 34 aligned with the liner and the valve seat.

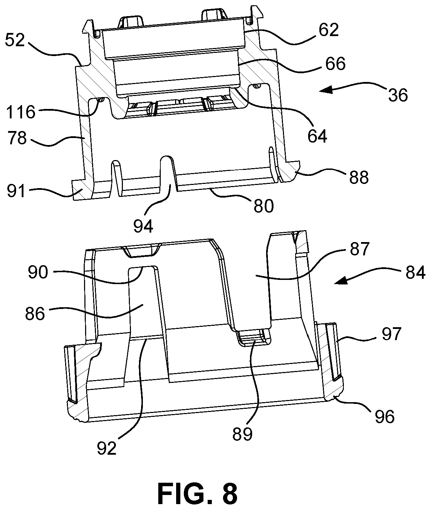

As shown in FIG. 8, the liner 84 includes closed slots 86 and open slots 87 both oriented parallel to the axis of the plunger. The closed slots 86 are closed at a forward end 90 and a rear end 92. The closed slots 86 receive a catch 88 (FIG. 6) extending radially outward from the end 80 of the rear region 78 of the carrier 36. The forward end 90 of the closed slots 86 engage a catch 88 to prevent further forward axial movement of the carrier 36 and its drain check shuttle assembly 34. The rear end 92 of the closed slots 86 engage the catch 88 to prevent further rearward axial movement of the carrier and the drain check shuttle assembly. The closed slots 86 prevent the drain check shuttle assembly 34 from moving too far forward or rearward, and thereby becoming stuck in the housing. The closed slots 86 also substantially suppress rotational movement of the drain check shuttle assembly within the liner. Suppressing rotational movement reduces the risk that the annular seals 38, 40, 42 are subjected to angular forces that could cause the annular seals to break their watertight seals or become damaged.

The open slots 87 in the liner 84 include a reinforced rear end 89 that stops rearward movement of the drain check shuttle assembly 34 by engaging the end 80 of the carrier and/or the catch(es) 91. The reinforcement may be a flange at the end of the slot. The reinforced rear end 89 may be positioned such that the end 80 of the carrier 36 engages before the catch(es) 88 engage(s) the rear ends 92 of the closed slots 86.

Slots 94 in the rear end 92 of the carrier allow the catches 88 to bend inward as the carrier is inserted into the liner 84 during assembly of the pressure regulator or drain check. During operation of the pressure regulator or drain check, the catches 88 are not intended to escape from the closed slots 86 in the liner 84.

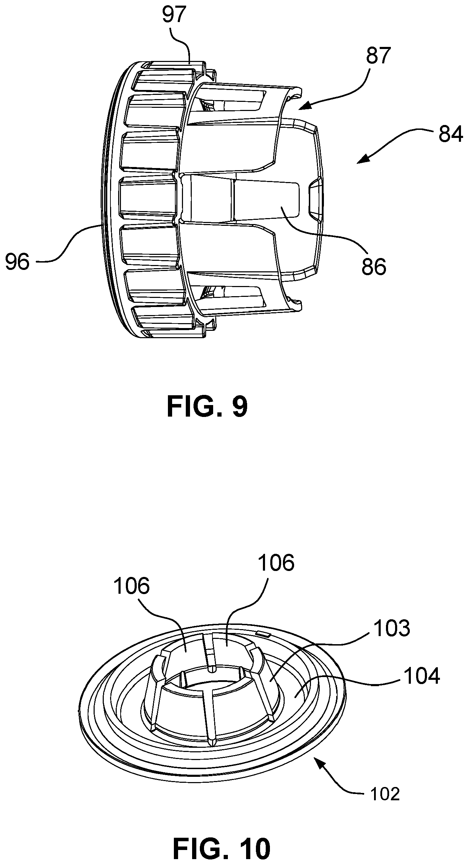

As shown in FIGS. 3 and 9, the lower annular edge 96 of the liner is seated in the inlet cap to secure an outer rim of an annular diaphragm 98 between the edge 96 and an annular ledge 100 (FIG. 3) of the outlet cap. The lower annular edge 96 may be relatively thick in a radial direction and supported by ribs 97 on the outer surface of the liner. The ribs 97 may assist in centering the liner within the housing and thereby aligning the edge 96 with the outer rim of the diaphragm.

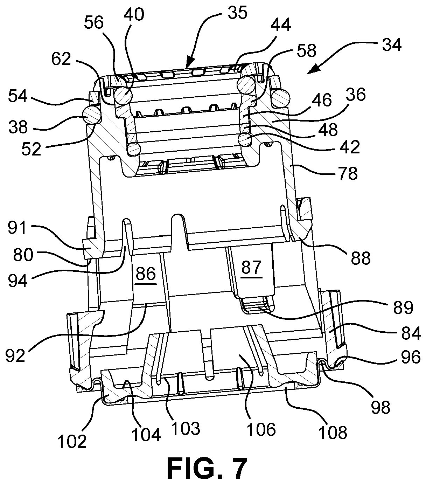

As shown in FIGS. 3 and 7, the diaphragm 98 is an annular disc and has an inner ledge attached to an annular plunger support 102. The plunger support 102 is in the liner 84 and is supported by the diaphragm 98. The plunger support 102 moves with the plunger, and as the diaphragm rolls, due to water pressure changes in the outlet flow passage 22 and water chamber 112.

FIGS. 7 and 10 show the plunger support 102 as having a frustoconical support 103 for the plunger. The frustoconical support includes fingers 106 that grasp the outer surface of the plunger 30. The fingers 106 engage a ridge or recess 105 (FIG. 2) on the outer surface of the plunger to lock the plunger support 102 to the plunger. The locking action also clamps the inner rim of the diaphragm between the annular recess 108 of the plunger support and an annular flange 109 extending radially outward from and fixed to the plunger.

The plunger support 102 has a forward-facing side with an annular channel 104 configured to receive an end of a helical spring 101. The rearward-facing end of the plunger support 102 includes an annular recess 108 to receive the inner rim of the diaphragm 98. The inner rim of the diaphragm 98 is clamped between the annular recess 108 of the plunger support 102 and an outer flange 109 on the plunger 30.

The diaphragm 98 is between a water chamber 112 in the outlet cap 14 and the internal chamber 114. The water chamber 112 is open to the water flowing through the outlet flow passage 22. The internal chamber 114 may be at atmospheric air pressure or may be subjected to a controlled hydraulic pressure from an external source of a pressurized fluid. The internal chamber 114 is sealed from the water flowing through the pressure regulator 10 by annular seals 38, 42, the carrier 36, liner 84, plunger 30 and diaphragm 98.

The pressure differences between the water pressure in the water chamber 112 and the gas (air) pressure in the internal chamber 114 causes the diaphragm 98 to deflect, e.g., roll. The deflection of the diaphragm moves the plunger axially. A rise in the water pressure in the outlet flow passage 22 causes the diaphragm to deflect forward and thereby moves the plunger inlet 27 towards the valve seat 26 to reduce the gap 32 which restricts water flow and reduces pressure in the outlet flow passage. A decrease in the water pressure in the water chamber 112 deflects the diaphragm rearward and thereby moves the plunger away from the valve seat and opens the gap 32 and increases pressure in the outlet flow passage.

The drain check shuttle assembly 34 is biased towards its forward position by the helical spring 101. In the forward position, the drain check shuttle assembly closes the gap 32 and shuts off water flow through the pressure regulator. The spring force of the helical spring 101 and the area of the front surface 76 of the first annular seal support 44 (which forms the front surface of the drain check shuttle assembly) are selected such that the force applied by water pressure against the front surface 76 overcomes the force of the helical spring 101 when the water pressure in the inlet exceeds a threshold water pressure. When the water pressure in the inlet flow passage 20 exceeds the threshold water pressure, the pressure forces the drain check shuttle assembly 34 to move rearward to open the gap 32. As the gap opens, water flows through the pressure regulator or drain check device.

The drain check shuttle assembly 34 and helical spring 101 may be configured such that the drain check shuttle 34 moves quickly between a forward position and a rearward position. The drain check shuttle 34 may be configured to not dwell in an intermediate position between the most forward and most rearward positions. Moving the drain check shuttle assembly quickly from the forward position to the rearmost position when the threshold pressure is reached allows the drain check shuttle assembly to function as a simple on-off valve.

A front end of the helical spring 101 is seated on an internal annular surface 116 of the carrier in the drain check shuttle assembly 34. A rear end of the helical spring is seated on an annular channel 104 in the plunger support.

The pressure regulator 10 regulates water pressure by maintaining a substantially uniform water pressure at the outlet flow passage 22. Pressure regulation is achieved by adjusting the gap 32 between the valve seat 26 and the inlet to the plunger. The gap is a constriction to the water flowing through the pressure regulator. Water flowing through the pressure regulator experiences a pressure drop when flowing through the gap. Widening of the gap reduces the pressure drop through the pressure regulator. Narrowing the gap increases the pressure drop through the pressure regulator. The width of the gap is automatically adjusted to maintain a uniform water pressure at the outlet of the pressure regulator.

The width of the gap is adjusted by moving the plunger axially with respect to the housing of the pressure regulator. As the plunger advances forward in the housing, the inlet to the plunger approaches the valve seat and thereby reduces the width of the gap 32. As the plunger moves rearward, the inlet to the plunger moves away from the valve seat and the width of the gap increases.

The helical spring 101 biases the plunger 30 towards the outlet cap 14 and away from the valve seat 26. One end of the helical spring is seated on the drain check shuttle assembly 34. The helical spring 101 biases the drain check shuttle assembly forward in the housing of the pressure regulator. The biasing force of the helical spring is overcome when the water pressure in the inlet flow passage 20 overcomes the force of the helical spring 101 and moves the drain check shuttle assembly to the rearward position.

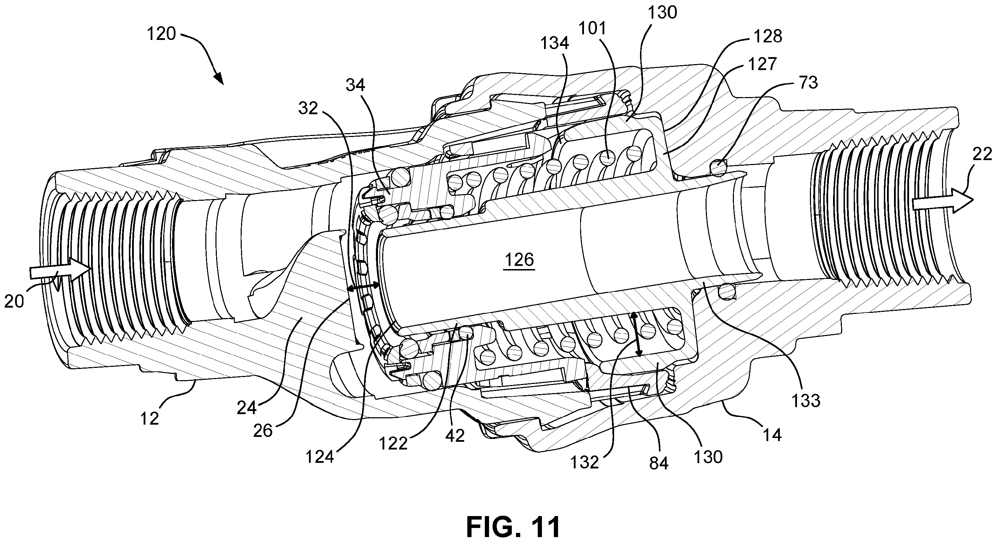

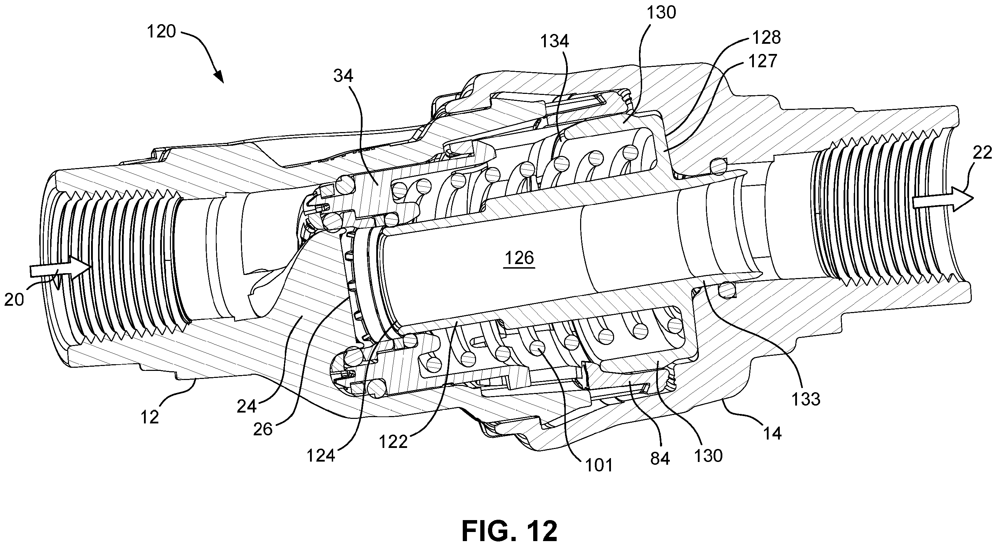

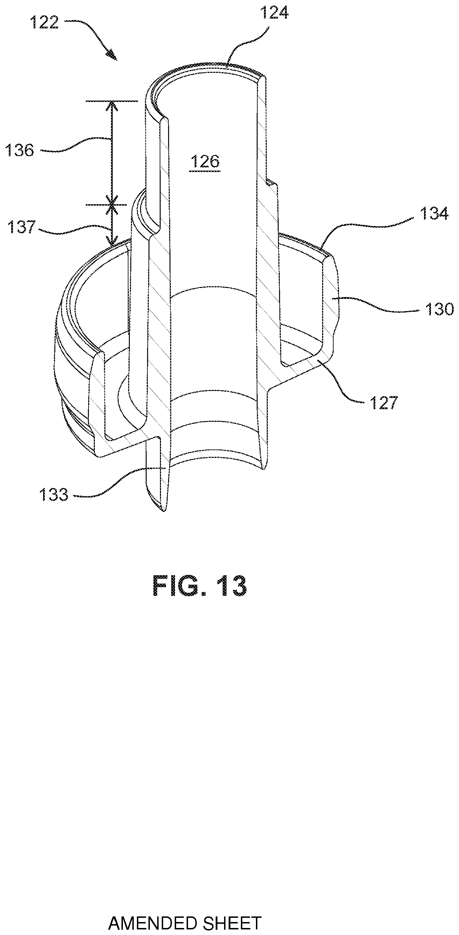

FIGS. 11 and 12 are perspective views of a drain check valve 120 having a hollow tube 122 fixed with respect to the housing. FIG. 11 shows a drain check shuttle assembly 34 in an open position in which the drain check shuttle assembly is positioned rearward to allow water to flow through the gap 32 and into the inlet 124 of a flow passage 126 through the hollow tube. FIG. 12 shows the drain check shuttle assembly 34 in a forward position which closes the gap 32 to block water flow through the drain check valve. FIG. 13 is a perspective view of the hollow tube 122.

The hollow tube 122 is held in a fixed position within the housing by the spring 101 that biases an annular flange 127 on the hollow tube 122 against an annular surface 128 of the outlet cap 14. The hollow tube does not move with respect to the housing and, thus, the gap 32 does not vary. A diaphragm is not needed between the tube and the housing because the hollow tube does not move relative to the housing.

The hollow tube 122 includes a cylindrical wall 130 that extends forward from the annular flange 127. The spring 101 is in an annular gap 132 between an outer surface of a tube portion 133 and the inner surface of the wall 130. The tube portion defines the flow passage 126.

An upper annular edge 134 of the cylindrical wall 130 and an outer surface of the cylindrical wall are adjacent inner surfaces of the cylindrical liner 84. The cylindrical liner 84 is a separate component from the hollow tube in the drain check valve 120 shown in FIGS. 11 and 12. The cylindrical wall 130 provides support for the cylindrical liner 84 and assists in positioning the cylindrical liner and the spring in the housing.

A forward cylindrical region 136 of the tube portion 133 has a narrower outer diameter than does a rearward region 137 of the tube portion. The forward cylindrical region 136 engages the drain check shuttle assembly 34. The second inner O-ring 42 of the drain check shuttle assembly slides against an outer surface of the forward cylindrical region 136 as the drain check shuttle assembly moves between the forward (closed) and rear (open) positions. The rearward region 137 of the tube portion 133 has a greater outer diameter to provide a greater thickness to the tube to increase the structural strength of the tube portion.

### AMENDED PAGE - CLEAN VERSION

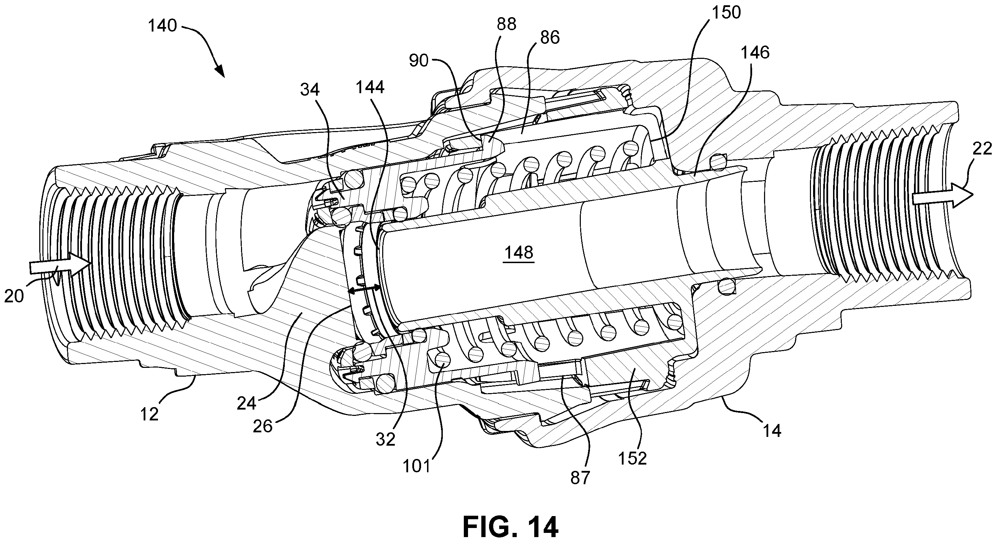

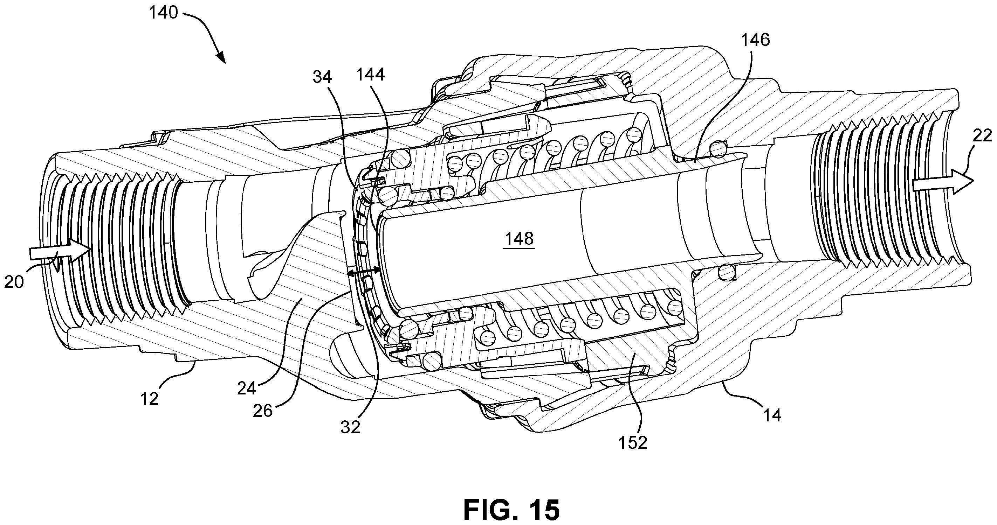

FIGS. 14 and 15 are perspective views of a drain check valve 140 having an integral hollow tube and liner 142. FIG. 15 shows the drain check shuttle assembly 34 in a rearward position that allows water to flow through the open gap 32 between the valve seat 26 and an inlet 144 to a cylindrical tube 146 portion of the integral hollow tube and liner, and into a flow passage 148 through the cylindrical tube. FIG. 14 shows the drain check shuttle assembly 34 in a forward position that closes the gap 32 to prevent water flow into the gap 32 and through the drain check valve.

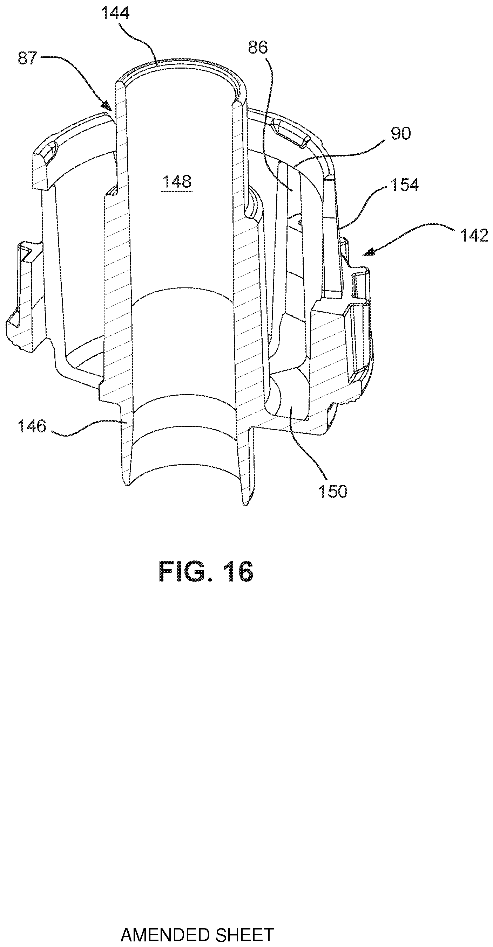

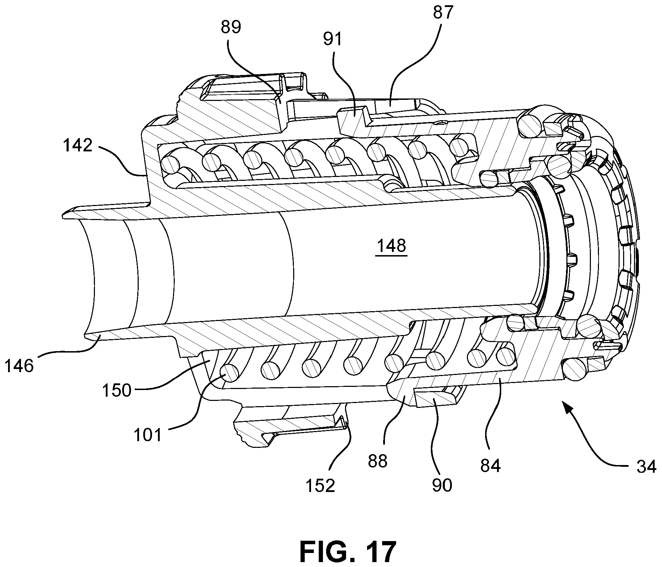

As shown in FIG. 16, the integral hollow tube and liner 142 is a single-piece component that combines the hollow tube and liner of previously described embodiments. The integral hollow tube and liner 142 may be plastic and formed by plastic injection molding, as are many of the other components of the drain check valves and pressure regulators described herein. FIG. 17 shows the integral hollow tube and liner 142 in an assembly with the helical spring 101 and the drain check valve assembly 34.

The integral hollow tube and liner 142 includes an annular surface 150 that receives an end of the helical spring 101. The annular surface 150 extends radially outward from the cylindrical tube 146 to a liner 152 having a generally cylindrical wall 154 that is substantially parallel to the cylindrical tube 146. The integral hollow tube and liner 142 has features similar to the cylindrical liner 84 show in FIG. 8. In particular, the integral hollow tube and liner 142 includes open slots 87 and closed slots 86. The slots receive the catches 88, 91 at the end of the cylindrical carrier 36 of the drain check shuttle assembly. As shown in FIG. 14, the catches 88 abut a forward end 90 of the closed slots 86 in the liner to stop further forward motion of the drain check shuttle assembly 34. Similarly, the open slots 87 in the liner have reinforced rear ends 89 that abut the catches 91 on the cylindrical carrier 36 to stop further rearward motion of the drain check assembly.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

## Claims

1. A flow control device (10, 120, 140) comprising:
a housing (11, 12, 14) having a flow passage including an inlet flow passage (20) and an outlet flow passage (22);
a tube (30, 122, 146) in the housing and defining a tube passage (28, 126, 148) included in the flow passage;
a valve seat (26) in the flow passage (20) and facing an inlet (27) to the tube;
a liner (84, 152) within the housing and fixed with respect to the housing, separated from the flow passage, and including at least one slot (86, 87); and
a drain check shuttle assembly (34) in the housing and configured to move relative to the housing and the tube, wherein the drain check shuttle assembly has:
a first position at which the drain check shuttle assembly spans a gap (32) between the valve seat and the inlet to the tube to prevent flow into the tube; and
a second position in which the drain check shuttle assembly is displaced from the valve seat to open the gap and allow flow into the tube; and
the drain check shuttle assembly includes a cylindrical carrier (36) including an opening (35) through which extends the tube,
**characterized in that**
the cylindrical carrier extends into the liner and is in sliding contact with the liner.

2. The flow control device of claim 1, wherein the cylindrical carrier (36) includes at least one catch (88, 91) protruding into the at least one slot (86, 87) of the liner, wherein rotational movement of the drain check shuttle assembly (34) within the liner is restricted by the at least one catch engaging the at least one slot.

3. The flow control device of claim 2, wherein the at least one slot (86, 87) is oriented parallel to a longitudinal axis of the tube (30), and the engagement between the at least one catch (88, 91) and the at least one slot limits axial movement of the drain check shuttle assembly with respect to the liner.

4. The flow control device of claims 2 or 3, wherein the at least one slot (86, 87) is in a rear region (78) of the cylindrical carrier.

5. The flow control device of claim 4, wherein the at least one slot (86, 87) is at least three slots arranged symmetrically around the liner.

6. The flow control device of any of claims 1 to 5, further comprising a helical spring (101) having a spring end seated against an internal annular surface (116) of the cylindrical carrier to bias the drain check shuttle assembly towards the first position.

7. The flow control device of any of claims 1 to 6, wherein the tube is a plunger (30) configured to move axially with respect to the housing, and the flow control device further comprises an annular diaphragm (98) forming a deformable seal between a liquid-filled chamber (112) receiving liquid flowing through the outlet flow passage (22) and an internal chamber (114) within the housing.

8. The flow control device of any of claims 1 to 6, wherein the tube is a hollow tube (122, 146) stationary with respect to the housing.

9. The flow control device of any of claims 1 to 8, wherein the drain check shuttle assembly (34) includes:
an outer annular seal (38) mounted to an outer surface of the cylindrical carrier (36) and configured to form a seal between the drain check shuttle assembly and the housing (11);
a first inner annular seal (40) mounted to the cylindrical carrier and extending around the opening (35) in the cylindrical carrier, wherein the first inner annular seal is configured to form a seal between the drain check shuttle assembly and a strut (24) supporting the valve seat and attached to the housing; and
a second inner annular seal (42) mounted to the cylindrical carrier and extending around the opening (35), wherein the second inner annular seal is configured to form a seal between the drain check shuttle assembly and the tube.

10. The flow control device of claim 9, further comprising a first annular seal support (44) mounted to a front region of the cylindrical carrier (36), wherein the first annular seal support includes an outer lip (54) abutting the outer annular seal (38).

11. The flow control device of claim 10, further comprising a second annular seal support (46) seated on an inside surface of the cylindrical carrier (36) and extending around the opening (35), wherein the second annular seal support includes a forwardly angled lip (58) gripping the first inner annular seal (40) and the first annular seal support (44) includes a rearwardly angled lip (56) gripping the first inner annular seal.

12. The flow control device of any of claims 1 to 11, wherein the tube (146) and the liner (152) are an integral, single-piece component.

13. A flow control device (10, 120, 140) comprising:
a housing (11, 12, 14) having a flow passage including an inlet flow passage (20) and an outlet flow passage (22);
a tube (30, 122, 146) in the housing and defining a tube passage (28, 126, 148) included in the flow passage;
a valve seat (26) in the flow passage (20) and facing an inlet (27) to the tube;
a liner (84, 152) within the housing and fixed with respect to the housing, separated from the flow passage, and including at least one slot (86, 87);
a drain check shuttle assembly (34) in the housing and configured to move relative to the housing and the tube; and
a carrier (36) including an opening (35) through which extends the tube,
**characterized in that**
the carrier extends into the liner and is in sliding contact with the liner, wherein the carrier (36) includes at least one catch (88, 91) protruding into the at least one slot (86, 87) of the liner, wherein engagement between the at least one slot and the at least one catch suppresses rotational movement of the drain check shuttle assembly (34) within the liner.

14. The flow control device of claim 13, wherein the drain check shuttle assembly (34) includes:
an outer annular seal (38) mounted to an outer surface of the carrier (36) and configured to form a seal between the drain check shuttle assembly and the housing (11);
a first inner annular seal (40) mounted to the carrier and extending around the opening (35) in the carrier, wherein the first inner annular seal is configured to form a seal between the drain check shuttle assembly and a strut (24) supporting the valve seat and attached to the housing; and
a second inner annular seal (42) mounted to the carrier and extending around the opening (35), wherein the second inner annular seal is configured to form a seal between the drain check shuttle assembly and the tube.

15. The flow control device of any of claims 13 or 14, further comprising a first annular seal support (44) mounted to a front end of the carrier (36), wherein the first annular seal support includes an outer lip (54) abutting the outer annular seal (38) and an inner lip (56) abutting the first inner annular seal (40).

## Patentansprüche

1. Durchfluss-Regelungsvorrichtung (10, 120, 140), umfassend:
ein Gehäuse (11, 12, 14) mit einem Durchflusskanal, der einen Einlass-Durchflusskanal (20) und einen Auslass-Durchflusskanal (22) umfasst;
ein Rohr (30, 122, 146), das in dem Gehäuse angeordnet ist und das einen Rohrdurchgang (28, 126, 148) definiert, der in dem Durchflusskanal enthalten ist;
einen Ventilsitz (26), der in dem Durchflusskanal (20) angeordnet ist und der einem Einlass (27) zu dem Rohr zugewandt ist;
eine Buchse (84, 152), die innerhalb des Gehäuses angeordnet ist und die in Bezug auf das Gehäuse befestigt ist, von dem Durchflusskanal getrennt ist und mindestens einen Schlitz (86, 87) aufweist; und
eine Abfluss-Rückschlaganordnung (34), die in dem Gehäuse angeordnet und so konfiguriert ist, dass sie sich relativ zu dem Gehäuse und dem Rohr bewegen kann, wobei die Abfluss-Rückschlaganordnung Folgendes aufweist:
eine erste Position, in der die Abfluss-Rückschlaganordnung einen Zwischenraum (32) zwischen dem Ventilsitz und dem Einlass zum Rohr überspannt, um einen Fluss in das Rohr zu verhindern; und
eine zweite Position, in der die Abfluss-Rückschlaganordnung von dem Ventilsitz weg verschoben ist, um den Zwischenraum zu öffnen und einen Durchfluss in das Rohr zu ermöglichen; und
wobei die Abfluss-Rückschlaganordnung ein zylindrisches Tragteil (36) mit einer Öffnung (35) aufweist, durch die sich das Rohr hindurch erstreckt,
**dadurch gekennzeichnet, dass**
das zylindrische Tragteil sich in die Buchse hinein erstreckt und in Gleitkontakt mit der Buchse steht.

2. Durchfluss-Regelungsvorrichtung nach Anspruch 1, wobei das zylindrische Tragteil (36) mindestens eine Sperre (88, 91) aufweist, die in den mindestens einen Schlitz (86, 87) der Buchse hineinragt, wobei die Drehbewegung der Abfluss-Rückschlaganordnung (34) innerhalb der Buchse durch die mindestens eine Sperre, die in den mindestens einen Schlitz eingreift, eingeschränkt wird.

3. Durchfluss-Regelungsvorrichtung nach Anspruch 2, wobei der mindestens eine Schlitz (86, 87) parallel zu einer Längsachse des Rohrs (30) ausgerichtet ist und der Eingriff zwischen der mindestens einen Sperre (88, 91) und dem mindestens einen Schlitz die axiale Bewegung der Abfluss-Rückschlaganordnung in Bezug auf die Buchse begrenzt.

4. Durchfluss-Regelungsvorrichtung nach Anspruch 2 oder 3, wobei sich der mindestens eine Schlitz (86, 87) in einem hinteren Bereich (78) des zylindrischen Tragteils befindet.

5. Durchfluss-Regelungsvorrichtung nach Anspruch 4, wobei der mindestens eine Schlitz (86, 87) aus mindestens drei Schlitzen besteht, die symmetrisch um die Buchse herum angeordnet sind.

6. Durchfluss-Regelungsvorrichtung nach einem der Ansprüche 1 bis 5, ferner umfassend eine Schraubenfeder (101), die mit einem Federende an einer inneren Ringfläche (116) des zylindrischen Tragteils anliegt, um die Abfluss-Rückschlaganordnung in Richtung auf die erste Position vorzuspannen.

7. Durchfluss-Regelungsvorrichtung nach einem der Ansprüche 1 bis 6, wobei das Rohr ein Kolben (30) ist, der so konfiguriert ist, dass er sich in axialer Richtung in Bezug auf das Gehäuse bewegen kann, und die Durchfluss-Regelungsvorrichtung ferner eine ringförmige Membran (98) umfasst, die eine verformbare Dichtung zwischen einer mit Flüssigkeit gefüllten Kammer (112), die Flüssigkeit aufnimmt, welche durch den Auslass-Durchflusskanal (22) strömt, und einer Innenkammer (114) innerhalb des Gehäuses bildet.

8. Durchfluss-Regelungsvorrichtung nach einem der Ansprüche 1 bis 6, wobei das Rohr ein hohles Rohr (122, 146) ist, das in Bezug auf das Gehäuse stationär angeordnet ist.

9. Durchfluss-Regelungsvorrichtung nach einem der Ansprüche 1 bis 8, wobei die Abfluss-Rückschlaganordnung (34) Folgendes umfasst:
eine äußere ringförmige Dichtung (38), die an einer äußeren Fläche des zylindrischen Tragteils (36) angebracht und so konfiguriert ist, dass sie eine Dichtung zwischen der Abfluss-Rückschlaganordnung und dem Gehäuse (11) bildet;
eine erste innere ringförmige Dichtung (40), die an dem zylindrischen Tragteil angebracht ist und sich um die Öffnung (35) in dem zylindrischen Tragteil herum erstreckt, wobei die erste innere ringförmige Dichtung so konfiguriert ist, dass sie eine Dichtung zwischen der Abfluss-Rückschlaganordnung und einer Stütze (24) bildet, die den Ventilsitz trägt und an dem Gehäuse befestigt ist; und
eine zweite innere ringförmige Dichtung (42), die an dem zylindrischen Tragteil angebracht ist und sich um die Öffnung (35) herum erstreckt, wobei die zweite innere ringförmige Dichtung so konfiguriert ist, dass sie eine Dichtung zwischen der Abfluss-Rückschlaganordnung und dem Rohr bildet.

10. Durchfluss-Regelungsvorrichtung nach Anspruch 9, ferner umfassend einen ersten ringförmigen Dichtungsträger (44), der an einem vorderen Bereich des zylindrischen Tragteils (36) angebracht ist, wobei der erste ringförmige Dichtungsträger eine äußere Lippe (54) umfasst, die an der äußeren ringförmigen Dichtung (38) anliegt.

11. Durchfluss-Regelungsvorrichtung nach Anspruch 10, ferner umfassend einen zweiten ringförmigen Dichtungsträger (46), der an einer inneren Fläche des zylindrischen Tragteils (36) sitzt und sich um die Öffnung (35) herum erstreckt, wobei der zweite ringförmige Dichtungsträger eine nach vorn abgewinkelte Lippe (58) umfasst, die die erste innere ringförmige Dichtung (40) umgreift, und der erste ringförmige Dichtungsträger (44) eine nach hinten abgewinkelte Lippe (56) umfasst, die die erste innere ringförmige Dichtung (40) umgreift.

12. Durchfluss-Regelungsvorrichtung nach einem der Ansprüche 1 bis 11, wobei das Rohr (146) und die Buchse (152) eine integrale, einteilige Komponente sind.

13. Durchfluss-Regelungsvorrichtung (10, 120, 140), umfassend:
ein Gehäuse (11, 12, 14) mit einem Durchflusskanal, der einen Einlass-Durchflusskanal (20) und einen Auslass-Durchflusskanal (22) umfasst;
ein Rohr (30, 122, 146), das in dem Gehäuse angeordnet ist und das einen Rohrdurchgang (28, 126, 148) definiert, der in dem Durchflusskanal enthalten ist;
einen Ventilsitz (26), der in dem Durchflusskanal (20) angeordnet ist und der einem Einlass (27) zu dem Rohr zugewandt ist;
eine Buchse (84, 152), die innerhalb des Gehäuses angeordnet ist und die in Bezug auf das Gehäuse befestigt ist, von dem Durchflusskanal getrennt ist und mindestens einen Schlitz (86, 87) aufweist;
eine Abfluss-Rückschlaganordnung (34), die in dem Gehäuse angeordnet und so konfiguriert ist, dass sie sich relativ zu dem Gehäuse und zum Rohr bewegen kann, und
ein Tragteil (36) mit einer Öffnung (35), durch die sich das Rohr erstreckt,
**dadurch gekennzeichnet, dass**
das Tragteil sich in die Buchse hinein erstreckt und in gleitendem Kontakt mit der Buchse steht,
wobei
das Tragteil (36) mindestens eine Sperre (88, 91) aufweist, die in den mindestens einen Schlitz (86, 87) der Buchse hineinragt, wobei der Eingriff zwischen dem mindestens einen Schlitz und der mindestens einen Sperre eine Drehbewegung der Abfluss-Rückschlaganordnung (34) innerhalb der Buchse unterdrückt.

14. Durchfluss-Regelungsvorrichtung nach Anspruch 13, wobei die Abfluss-Rückschlaganordnung (34) Folgendes umfasst:
eine äußere ringförmige Dichtung (38), die an einer äußeren Fläche des Tagteils (36) angebracht und so konfiguriert ist, dass sie eine Dichtung zwischen der Abfluss-Rückschlaganordnung und dem Gehäuse (11) bildet;
eine erste innere ringförmige Dichtung (40), die an dem Tragteil angebracht ist und sich um die Öffnung (35) in dem Träger herum erstreckt, wobei die erste innere ringförmige Dichtung so konfiguriert ist, dass sie eine Dichtung zwischen der Abfluss-Rückschlaganordnung und einer Stütze (24) bildet, die den Ventilsitz trägt und an dem Gehäuse befestigt ist; und
eine zweite innere ringförmige Dichtung (42), die an dem Tragteil angebracht ist und sich um die Öffnung (35) herum erstreckt, wobei die zweite innere ringförmige Dichtung so konfiguriert ist, dass sie eine Dichtung zwischen der Abfluss-Rückschlaganordnung und dem Rohr bildet.

15. Durchfluss-Regelungsvorrichtung nach einem der Ansprüche 13 oder 14, ferner umfassend einen ersten ringförmigen Dichtungsträger (44), der an einem vorderen Ende des Tragteils (36) angebracht ist, wobei der erste ringförmige Dichtungsträger eine äußere Lippe (54), die an der äußeren ringförmigen Dichtung (38) anliegt, und eine innere Lippe (56) umfasst, die an der ersten inneren ringförmigen Dichtung (40) anliegt.

## Revendications

1. Dispositif de commande de flux (10, 120, 140) comprenant :
- un corps (11, 12, 14) ayant un passage de flux avec une entrée de passage de flux (20) et une sortie de passage de flux (22),
- un tube (30, 122, 146) dans le corps et formant un passage de tube (28, 126, 148) dans le passage de flux,
- un siège de soupape (26) dans le passage de flux (20), faisant face à l'entrée (27) du tube,
- un manchon (84, 152) dans le corps et fixé au corps en étant séparé du passage de flux et ayant au moins une fente (86, 87), et
- un assemblage de navette de contrôle de flux (34) dans le corps et configuré pour être mobile par rapport au corps et au tube, l'assemblage de navette de contrôle de flux ayant :
* une première position dans laquelle l'assemblage de navette de contrôle de flux couvre l'intervalle (32) entre le siège de soupape et l'entrée dans le tube pour interdire le flux dans le tube, et
* une seconde position dans laquelle l'assemblage de navette de contrôle de flux est écarté du siège de soupape pour ouvrir l'intervalle et permettre au flux d'entrer dans le tube, et
- l'assemblage de navette de contrôle de flux a un support cylindrique (36) avec une ouverture (35) traversée par le tube,
dispositif **caractérisé en ce que**
le support cylindrique s'étend dans le manchon et il est en contact coulissant avec le manchon.

2. Dispositif de contrôle de flux selon la revendication 1,
dans lequel
le support cylindrique (36) a au moins un bec (88, 91) venant en saillie dans au moins une fente (86, 87) du manchon, pour limiter le mouvement de rotation de l'assemblage de navette de contrôle de flux (34) dans le manchon par au moins un bec venant dans au moins une fente.

3. Dispositif de contrôle de flux selon la revendication 2,
dans lequel
au moins la fente (86, 87) est orientée parallèlement à l'axe longitudinal du tube (30) et l'engagement entre au moins un bec (88, 91) et au moins une fente limite le mouvement axial de l'assemblage de navette de contrôle de flux par rapport au manchon.

4. Dispositif de contrôle de flux selon la revendication 2 ou 3,
dans lequel
au moins une fente (86, 87) est dans la région arrière (78) du support cylindrique.

5. Dispositif de contrôle de flux selon la revendication 4,
dans lequel
au moins une fente (86, 87) est constituée par au moins trois fentes organisées symétriquement autour du manchon.

6. Dispositif de contrôle de flux selon l'une des revendications 1 à 5, comprenant en outre :
un ressort hélicoïdal (101) ayant une extrémité de ressort engagée contre la surface annulaire intérieure (116) du support cylindrique pour pousser l'assemblage de navette de contrôle de flux vers sa première position.

7. Dispositif de contrôle de flux selon l'une quelconque des revendications 1 à 6,
dans lequel
le tube est un plongeur (30) configuré pour se déplacer axialement par rapport au corps et le dispositif de contrôle de flux comprend en outre un diaphragme annulaire (98) formant un joint déformable entre la chambre remplie de liquide (112) recevant le liquide traversant le passage de sortie de flux (22) et une chambre intérieure (114) du corps.

8. Dispositif de contrôle de flux selon l'une quelconque des revendications 1 à 6,
dans lequel
le tube est un tube creux (122, 146), fixe par rapport au corps.

9. Dispositif de contrôle de flux selon l'une quelconque des revendications 1 à 8,
dans lequel
l'assemblage de navette de contrôle de flux (34) comprend :
- un joint annulaire extérieur (38) monté sur la surface extérieure du support cylindrique (36) et configuré pour former un joint entre l'assemblage de navette de contrôle de flux et le corps (11),
- un premier joint annulaire intérieur (40) installé sur le support cylindrique et entourant l'ouverture (35) du support cylindrique, le premier joint annulaire intérieur étant configuré pour former un joint entre l'assemblage de navette de contrôle de flux et un embout (24) porté par le siège de soupape et fixé au corps, et
- un second joint annulaire intérieur (42) monté sur le support cylindrique et entourant l'ouverture (35), ce second joint annulaire intérieur étant configuré pour former un joint entre l'assemblage de navette de contrôle de flux et le tube.

10. Dispositif de contrôle de flux selon la revendication 9,
comprenant en outre :
un support de premier joint annulaire (44) dans la région frontale du support cylindrique (36), le support de premier joint annulaire ayant une lèvre extérieure (54) venant contre le joint annulaire extérieur (38).

11. Dispositif de contrôle de flux selon la revendication 10,
comprenant en outre
un second support de joint annulaire (46) logé contre la surface intérieure du support cylindrique (36) et entourant l'ouverture (35), ce second support de joint annulaire ayant une lèvre (58) inclinée vers l'avant, recevant le premier joint annulaire intérieur (40) et le premier support de joint annulaire (44) ayant une lèvre (56) inclinée vers l'arrière contre le premier joint annulaire intérieur.

12. Dispositif de contrôle de flux selon l'une des revendications 1 à 11, dans lequel
le tube (146) et la manchon (152) font corps comme composant en une seule pièce.

13. Dispositif de contrôle de flux (10, 120, 140) comprenant :
- un corps (11, 12, 14) ayant un passage de flux avec une entrée de passage de flux (20) et une sortie de passage de flux (22),
- un tube (30, 122, 146) dans le corps formant un passage de tube (28, 126, 148) dans le passage de flux,
- un siège de soupape (26) dans le passage de flux (20) et faisant face à l'entrée (27) du tube,
- un manchon (84, 152) avec un corps et fixé par rapport au corps en étant séparé du passage de flux et ayant au moins une fente (86, 87),
- un assemblage de navette de contrôle de flux (34) dans le corps et configuré pour être mobile par rapport au corps et au tube, et
- un support (36) avec une ouverture (35) traversée par le tube, dispositif **caractérisé en ce que**
le support s'étend dans la manchon et il est en contact coulissant avec la manchon,
- dans lequel le support (36) a au moins un bec (88, 91) venant en saillie dans au moins une fente (86, 87) du manchon, l'engagement entre au moins une fente et au moins une bec bloquant le mouvement de rotation de l'assemblage de navette de contrôle de flux (34) dans le manchon.

14. Dispositif de contrôle de flux selon la revendication 13,
dans lequel
l'assemblage de navette de contrôle de flux (34) comprend :
- un joint annulaire extérieur (38), monté sur la surface extérieure du support (36) et configuré pour former un joint entre l'assemblage de navette de contrôle de flux et le corps (11),
- un premier joint annulaire intérieur (40) installé sur le support et entourant l'ouverture (35) dans le support, le premier joint annulaire intérieur étant configuré pour former un joint entre l'assemblage de navette de contrôle de flux et un embout (24) portant le siège de soupape et fixé au corps, et
- un second joint annulaire intérieur (42) installé sur le support et entourant l'ouverture (35), le second joint annulaire intérieur étant configuré pour former un joint entre l'assemblage de navette de contrôle de flux et le tube.

15. Dispositif de contrôle de flux selon l'une quelconque des revendications 13 ou 14,
comprenant en outre :
un premier support de joint annulaire (44) monté à l'extrémité avant du support (36), le premier support de joint annulaire ayant une lèvre extérieure (54) venant contre le joint annulaire extérieur (38) et une lèvre intérieur (56) venant en butée contre le premier joint annulaire intérieur (40).
